## Europäisches Patentamt
## European Patent Office
## Office européen des brevets

(19)

(11) Veröffentlichungsnummer: **0 111 718**
**B1**

(12) # EUROPÄISCHE PATENTSCHRIFT

(45) Veröffentlichungstag der Patentschrift:
**14.01.87**

(51) Int. Cl.⁴: **B 29 B 7/04**

(21) Anmeldenummer: **83111083.8**

(22) Anmeldetag: **07.11.83**

(54) Vorrichtung zum Erzeugen eines Gemisches aus mindestens zwei Kunststoffkomponenten.

(30) Priorität: **16.11.82 DE 3242278**

(43) Veröffentlichungstag der Anmeldung:
**27.06.84 Patentblatt 84/26**

(45) Bekanntmachung des Hinweises auf die Patenterteilung:
**14.01.87 Patentblatt 87/3**

(84) Benannte Vertragsstaaten:
**BE DE FR GB IT NL SE**

(56) Entgegenhaltungen:
**DE-A-2 801 942**
**DE-A-2 815 944**
**DE-A-3 000 478**
**DE-B-2 007 935**

(73) Patentinhaber: **BASF Aktiengesellschaft, Carl-Bosch- Strasse 38, D-6700 Ludwigshafen (DE)**

(72) Erfinder: **Ihbe, Joerg, An der Leitn 7, D-8035 Gauting (DE)**
Erfinder: **Taubenmann, Peter, Strindbergstrasse 1, D-8000 München 60 (DE)**
Erfinder: **Thiele, Heino, Dr., An der Froschlache 23, D-6700 Ludwigshafen (DE)**
Erfinder: **Zettler, Hans- Dieter, Bueckelhaube 23, D-6718 Grunstadt (DE)**

## Beschreibung

Die Erfindung betrifft eine Vorrichtung zum Erzeugen eines vorzugsweise chemisch reaktionsfähigen Gemisches aus mindestens zwei Kunststoffkomponenten nach dem Oberbegriff des Anspruchs 1.

Bei einer bekannten Mischvorrichtung dieser Art (DE-AS 21 17 533) öffnen und schließen wechselweise und gleichzeitig die Eintrittsöffnungen für die einzelnen Kunststoffkomponenten, ohne daß besondere Steuermittel für das Öffnen und Schließen vorgesehen werden müssen, da bei der hin- und hergehenden Bewegung des Steuerorgane die Eintrittsöffnungen jeweils überfahren werden. Das Steuerorgan weist dabei die Eintrittsöffnungen umgreifende Dichtflächen auf. Beim Überfahren der Eintrittsöffnungen werden diese durch die Dichtflächen für eine gewisse Zeit vollständig verschlossen, bevor die Kunststoffkomponenten entweder in die Mischkammer oder in die Überströmkanäle eintreten können. Während dieser Zeitspanne des vollständigen Verschließens der Eintrittsöffnungen erhöht sich der zwischen den ständig fördernden Dosierpumpen und den Einspritzdüsen aufgebaute Druck. Abweichungen von dem als optimal ermittelten Arbeitsdruck im Dosiersystem ziehen jedoch Beeinträchtigungen im Mischungsergebnis nach sich. Insbesondere zu Beginn eines Mischvorganges ergeben sich aufgrund höherer Strömungsgeschwindigkeiten der Kunststoffkomponemten abweichende Mischungsverhältnisse und damit geringere Produktqualitäten. Um diese Qualitätsminderung möglichst gering zu halten sind sehr hohe Geschwindigkeiten für die Bewegung des Steuerorgans erforderlich, was aber nur mit besonderem technischem Aufwand zu ermöglichen ist.

Der Erfindung liegt daher die Aufgabe zugrunde, bei einer Mischvorrichtung der vorstehend bereichneten Art, unter Beibehaltung der baulich und steuerungstechnisch einfachen Komponentenrückführung, mit einfachen Mitteln eine Änderung der Strömungsgeschwindigkeiten der Kunststoffkomponenten während eines Spritzzyklus zu verhindern und gleichzeitig die Dosiergenauigkeit zu erhöhen.

Zur Lösung dieser Aufgabe wird die Maßnahme nach dem Kennzeichen des Anspruchs 1 vorgeschlagen.

Die Gleichmäßigkeit der Strömungsgeschwindigkeiten der Kunststoffkomponenten wird nach der Erfindung dadurch erreicht, daß die Eintrittsöffnungen an der Innenwand des Mischkammergehäuses und die entsprechenden Bereiche der Mantelfläche des Steuerorgans größenmäßig aufeinander abgestimmt sind, d.h. die Eintrittsöffnungen werden nur in einer einzigen Stellung des Steuerorgans vollständig verschlossen. Druckspitze, bzw. Druckstöße beim Übergang des Steuerorgans von der Schließ-bzw.

Zirkulationsstellung in die Mischstellung und umgekehrt treten dadurch nicht auf. Es hat sich ferner gezeigt, daß auch die Hubgeschwindigkeit des Steuerorgans wesentlich verringert werden kann, ohne daß das Mischergebnis nachteilig beeinflußt wird. Dementsprechend schwach kann die hydraulische Antriebseinheit für das Steuerorgan dimensioniert werden.

Nach einer Ausgestaltung der Erfindung haben die Eintrittsöffnungen die Form eines Langlochs. Das hat den Vorteil, daß die die durch die Innenwand des Gehäuses und die Mantelfläche des Steuerorgans gebildete Dichtfläche hinreichend groß ausgeführt werden kann.

Die Erfindung wird im folgenden unter Hinweis auf die Zeichnung anhand eines Ausführungsbeispieles mäher erläutert.

Es zeigt:

Figur 1 eine Seitenansicht der Vorrichtung nach der Erfindung, teilweise geschnitten und

Figur 2 einen Längsschnitt durch einen Teil der Vorrichtung gemäß der Linie A-B der Fig. 1.

Die Vorrichtung zum Mischen von zwei Kunststoffkomponenten besteht im wesentlichen aus einem Gehäuse (1), in dem eine Mischkammer (2) ausgebildet ist. In die im allgemeinen kreiszylindrische Mischkammer führen Eintrittsöffnungen (3) und (4). Mit (5) ist ein Steuerorgan bezeichnet, das in der Mischkammer hin- und herbewegbar ist, um den Einlauf der Kunststoffkomponenten zu steuern umd gleichzeitig die Mischkammer zu reinigen. Das in der Zeichnung in seiner Schließstellung dargestellte Steuerorgan mit Überströmkanälen (6) und (7) wird durch eine hydraulische Kolben-Zylinder-Einheit betätigt und ist bis in den Bereich der Austrittsöffnung (8) der Mischkammer verfahrbar. In dieser sogenannten Zirkulationsstellung treffen die Kunststoffkomponenten nicht aufeinander, sondern werden über die Überströmkanäle durch Öffnungen (9) und (10) wieder zu Vorratsbehältern zurückgeführt.

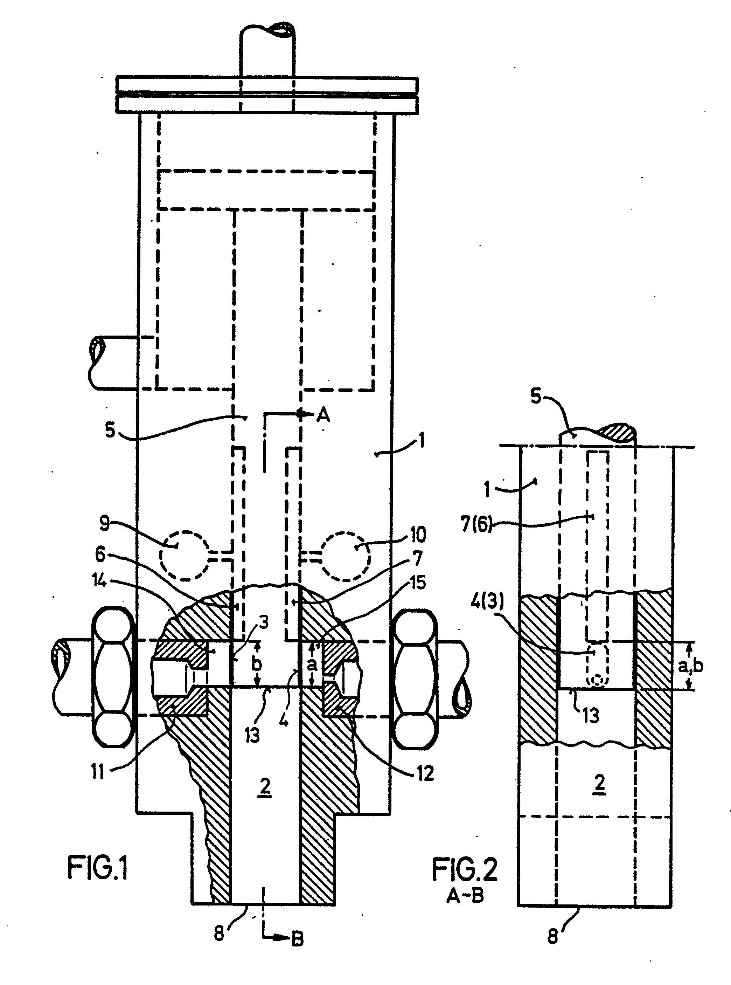

In den Eintrittsöffnungen (3) und (4) ist jeweils eine Einspritzdüse (11) bzw. (12) eingesetzt. Die Eintrittsöffnungen haben die Form eines Langlochs, wobei die Einspritzdüsen vorzugsweise zur Austrittsöffnung (8) der Mischkammer (2) hin versetzt angebracht werden. Beim Bewegen des Steuerorgans (5) von oW Zirkulations- in die Mischstellung oder umgekehet werden die Eintrittsöffnungen durch die Mantelfläche des Steuerorgans auch ganz kurzzeitig vollständig überdeckt (Fig. 1) und es entstehen Freiräume (14) und (15) zwischen den Einspritzdüsen und dem Steuerorgan. Die axiale Erstreckung des Bereichs (b) der Mantelfläche des Steuerorgans zwischen dessen der Austrittsöffnung der Mischkammer zugekehrten Stirmfläche (13) und dem unteren Ende der Überströmkanäle (6) bzw. (7) stimmt dabei mit den entsprechenden Abmessungen (a) der Eintrittsöffnungen exakt überein. Auf diese Weise werden sich in den Komponentenleitungen aufbauende Druckspitzen beim Überfahren der Eintrittsöffnungen mit der Dichtfläche des Steuerorgans verhindert. Eine Störung des Mischungsverhältmisses zu Beginn des Dosiervorgangs kann dadurch wirkungsvoll vermieden werden.

## Patentansprüche

1. Vorrichtung zum Erzeugen eines vorzugsweise chemisch reaktionsfähigen Gemisches aus mindestens zwei Kunststoffkomponenten, mit einer Mischkammer (2), die Eintrittsöffnungen (3) und (4) für die einzelnen Kunststoffkomponenten und eine Austrittsöffnung (8) für das Kunststoffkomponenten-Gemisch besitzt, sowie mit einem in der Mischkammer (2) angeordneten querschnittsgleichen Steuerorgan (5), das aus einer die Eintrittsöffnungen (3) und (4) offenlassenden hinteren Stellung bis in den Bereich der Austrittsöffnung (8), dabei die Eintrittsöffnungen(3) und (4) gegenüber der Mischkammer(4) gleichzeitig absperrend, hin- und herbewegbar ist, wobei am Steuerorgam (5) Überströmkanäle (6) und (7) vorgesehen sind, durch die die Eintrittsöffnungen (3) und (4) zeitsynchron mit ihrem Abschluß von der Mischkammer (2) mit Rückführleitungen verbindbar sind, dadurch gekennzeichnet, daß die axiale Erstreckung eines Bereiches (b) der Mantelfläche des Steuerorgans (5) zwischen dessen der Austrittsöffnung (8) zugekehrten Stirnfläche (13) und dem unteren Ende der Überströmkanäle (6, 7) mit der entsprechendem Abmessung (a) der Eintrittsöffnungen (3) und (4) übereinstimmt.

2. Vorrichtung nach Anspruch 1, dadurch gekennzeichnet, daß die Eintrittsöffnungen (3) und (4) die Form eines Langlochs haben.

## Claims

1. Apparatus for producing a mixture, which is preferably chemically reactive, from at least two plastic components, which comprises a mixing chamber (2) possessing inlet apertures (3) and (4) for the individual plastic components and an outlet aperture (8) for the mixture, and has a control element (5) which is located in the mixing chamber, has the same cross-section as this and can be moved to and fro from a rear position which leaves the inlet apertures open as far as the region of the outlet aperture, in which position the inlet apertures are simultaneously cut off from the mixing chamber, the control element being provided with overflow channels (6) and (7) through which the inlet apertures, synchronously with being cut off from the mixing chamber, can be connected to recycle lines, wherein the axial extension of a region (b) of the peripheral surface of the control element (5) between its end face (13), which faces the outlet aperture (8), and the lower end of the overflow channels (6, 7) matches the corresponding dimension (a) of the inlet apertures (3) and (4).

2. Apparatus as claimed in claim 1, wherein the inlet apertures (3) and (4) are each in the form of an elongated hole.

## Revendications

1. Installation pour la production d'un mélange constitué d'au moins deux matières plastiques, de préférence chimiquement réactif, comprenant une chambre de mélange (2) avec des orifices d'introduction (3) et (4) pour les divers composants plastiques et une ouverture d'évacuation (8) du mélange de matières plastiques, ainsi qu'un organe de manoeuvre (5), disposé dans la chambre de melange et possédant une section identique à la section de celle-ci, cet organe pouvant effectuer des mouvements de va-et-vient entre une position arrière, dans laquelle les orifices d'introduction sont ouverts, et une position proche de l'ouverture d'évacuation, dans laquelle les orifices d'introduction sont obturés par rapport à la chambre de mélange, cet organe de manoeuvre étant pourvu de canaux de décharge (6) et (7), par lesquels les orifices d'introduction sont mis, de façon synchrone avec leur obturation par rapport à la chambre de mélange, en liaison avec des conduits de retour, caractérisée en ce que la dimension axiale d'une région (b) du pourtour de l' organe de manoeuvre (5), entre sa surface frontale (13) située du côté de l'ouverture d'évacuation (8) et l'extrémité inférieure des canaux de décharge (6, 7), coïncide avec la dimension correspondante (a) des orifices d'introduction (3) et (4).

2. Installation suivant la revendication 1, caractérisée en ce que les orifices d'introduction (3) et (4) possédent une forme oblongue.

FIG.1

FIG.2
A-B